(19) Europäisches Patentamt / European Patent Office / Office européen des brevets

(11) **EP 4 580 015 A1**

(12) **DEMANDE DE BREVET EUROPEEN**

(43) Date de publication:
**02.07.2025 Bulletin 2025/27**

(21) Numéro de dépôt: **24219207.8**

(22) Date de dépôt: **11.12.2024**

(51) Classification Internationale des Brevets (IPC):
*H02K 49/04* *(2006.01)*    *H02K 1/30* *(2006.01)*
*H02K 9/06* *(2006.01)*    *H02K 9/22* *(2006.01)*

(52) Classification Coopérative des Brevets (CPC):
**H02K 49/043;** H02K 1/30; H02K 9/06; H02K 9/227;
H02K 2205/12; H02K 2213/03

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **27.12.2023 FR 2315351**

(71) Demandeur: **Telma**
**95310 Saint-Ouen L'Aumône (FR)**

(72) Inventeurs:
• **AKAFOU, Mbarek**
  **78130 LES MUREAUX (FR)**
• **LOUNIS, Rafik**
  **95800 CERGY (FR)**
• **BELANCE, Romuald**
  **95170 DEUIL LA BARRE (FR)**
• **QUENNET, Nicolas**
  **95240 CORMEILLES EN PARISIS (FR)**

(74) Mandataire: **Plasseraud IP**
**104 Rue de Richelieu**
**CS92104**
**75080 Paris Cedex 02 (FR)**

(54) **ROTOR DE MACHINE ÉLECTRIQUE TOURNANTE ET ENSEMBLE RALENTISSEUR ÉLECTROMAGNÉTIQUE ET GÉNÉRATRICE**

(57) L'invention concerne un rotor (2) de machine électrique tournante, le rotor comportant :
- un corps cylindrique (6) comprenant une face périphérique (30), une face latérale de raccordement (28); la face périphérique comprenant un premier bord (34) adjacent à la face latérale de raccordement ;
- une bague intérieure (4) coaxiale au corps cylindrique ;
- des bras de fixation (8) raccordés à la bague intérieure et à la face latérale de raccordement du corps cylindrique,
- des premières ailettes de refroidissement (38) agencées sur la face périphérique, les premières ailettes de refroidissement s'étendant le long du premier bord , les premières ailettes de refroidissement étant bombées et ayant une concavité orientée vers l'avant,
- des deuxièmes ailettes de refroidissement (39) agencées sur la face périphérique, les deuxièmes ailettes de refroidissement étant bombées et ayant une concavité orientée vers l'arrière.

L'invention concerne un ensemble ralentisseur électromagnétique et génératrice.

[Fig. 1]
FIG. 1

EP 4 580 015 A1

## Description

### Domaine technique de l'invention

L'invention concerne un rotor de machine tournante et en particulier un rotor de ralentisseur électromagnétique pour véhicule. L'invention concerne également un ensemble ralentisseur électromagnétique et génératrice.

### Etat de la technique antérieure

Il est connu un rotor d'un ensemble ralentisseur électromagnétique et génératrice comportant une bague intérieure destinée à être montée sur un arbre rotatif, un flasque latéral et un corps cylindrique coaxial à la bague intérieure. La face périphérique du rotor et lisse ou comporte des ailettes de refroidissement. Le flasque est constitué par une plaque en forme d'anneau qui relie la bague intérieure au corps cylindrique. Le corps cylindrique constitue l'induit du ralentisseur.

Un tel rotor est décrit dans la demande de brevet FR 18 55 848 déposée au nom de la demanderesse. Toutefois, l'induit de ce rotor n'est pas beaucoup ventilé de sorte qu'après une utilisation importante, le rotor peut se déformer.

### Présentation de l'invention

Il serait souhaitable de proposer un rotor qui ne se déforme pas au cours du temps sous l'effet de la chaleur. Il serait également souhaitable de proposer un rotor ayant peu de perte aérodynamique.

### Résumé de l'invention

La présente invention a pour objet un rotor de machine électrique tournante, en particulier de ralentisseur électromagnétique pour véhicule, le rotor étant propre à tourner autour d'un axe de rotation selon un sens de rotation, l'axe de rotation s'étendant selon une direction axiale, le rotor comportant :

- un corps cylindrique comprenant une face périphérique, une face latérale de raccordement et une face latérale libre opposée à la face latérale de raccordement ; la face périphérique comprenant un premier bord adjacent à la face latérale de raccordement et un deuxième bord ;
- une bague intérieure destinée à être fixée à un arbre rotatif, la bague intérieure et le corps cylindrique étant coaxiaux ;
- des bras de fixation raccordés à la bague intérieure et à la face latérale de raccordement du corps cylindrique,
- une pluralité de premières ailettes de refroidissement agencées sur la face périphérique du corps cylindrique, les premières ailettes de refroidissement étant disposées selon une première rangée s'étendant le long du premier bord , les premières ailettes de refroidissement étant bombées et ayant une concavité orientée vers l'avant en considérant le sens de rotation du rotor,
- une pluralité de deuxièmes ailettes de refroidissement agencée sur la face périphérique du corps cylindrique, les deuxièmes ailettes de refroidissement étant disposées selon une deuxième rangée s'étendant parallèlement à la première rangée, les deuxièmes ailettes de refroidissement étant bombées et ayant une concavité orientée vers l'arrière en considérant le sens de rotation du rotor.

Avantageusement, la forme et la disposition des premières ailettes de refroidissement permet d'aspirer une grande quantité d'air et d'améliorer le refroidissement du corps cylindrique. Avantageusement, la forme et la disposition des deuxièmes ailettes de refroidissement permet de réduire les frottements entre les flux d'air et les ailettes et de réduire les pertes aérodynamiques.

Les caractéristiques exposées dans les paragraphes suivants peuvent, optionnellement, être mises en oeuvre. Elles peuvent être mises en oeuvre indépendamment les unes des autres ou en combinaison les unes avec les autres :

- les premières ailettes de refroidissement présentent une courbure ayant un premier centre et un premier rayon de courbure, le premier centre étant éloigné d'une première distance d'une extrémité du premier bord, la première distance étant mesurée selon la direction axiale, le rapport entre le premier rayon de courbure et la première distance étant compris entre 1 et 2.
- les deuxièmes ailettes de refroidissement présentent une courbure ayant un deuxième centre et un deuxième rayon de courbure, le deuxième centre étant éloigné d'une deuxième distance d'une extrémité du deuxième bord latéral, la deuxième distance étant mesurée selon la direction axiale, le rapport entre le deuxième rayon de courbure et la deuxième distance étant compris entre 1 et 2.
- Le premier centre est éloigné du deuxième centre d'une troisième distance mesurée selon une direction perpendiculaire à la direction axiale, le rapport entre, d'une part deux fois la longueur d'un rayon de courbure parmi le premier rayon de courbure et le deuxième rayon de courbure et d'autre part la troisième distance est comprise entre 1,2 et 1,5.

- les premières ailettes de refroidissement présentent un plan médian, et dans lequel le plan médian des premières ailettes de refroidissement forme un angle avec le plan radial ; l'angle étant compris entre 40 degrés et 60 degrés, le plan radial étant perpendiculaire à l'axe de rotation.
- Les deuxièmes ailettes de refroidissement présentent un plan médian, et dans lequel le plan médian des deuxièmes ailettes de refroidissement est parallèle au plan médian des premières ailettes de refroidissement.

- La deuxième rangée s'étend le long du deuxième bord et dans lequel le rotor comporte une couronne coaxiale au corps cylindrique, et dans lequel la couronne s'étend uniquement au-dessus d'une partie centrale de la face périphérique, une partie des premières ailettes de refroidissement et une partie des deuxièmes ailettes de refroidissement étant ouvertes sur l'extérieur.

Avantageusement, l'ouverture au-dessus de l'entrée des canaux de refroidissement favorise l'accès de l'air aux canaux de refroidissement et l'ouverture au-dessus de la sortie des canaux de refroidissement favorise l'évacuation de l'air.

- La couronne comporte au moins une première extrémité latérale, et le premier bord est délimité par une extrémité, la première extrémité latérale de la couronne étant éloignée de l'extrémité du premier bord d'une quatrième distance comprise entre 15 millimètres et 30 millimètres, ladite quatrième distance étant mesurée selon la direction axiale.
- La couronne comporte au moins une deuxième extrémité latérale et le deuxième bord est délimité par une extrémité, l'extrémité latérale de la couronne étant éloignée de l'extrémité du deuxième bord d'une cinquième distance comprise entre 15 millimètres et 30 millimètres, ladite cinquième distance étant mesurée selon la direction axiale.

Le rotor comporte en outre une pluralité de troisièmes ailettes de refroidissement fixées à la face périphérique du corps cylindrique, les troisièmes ailettes de refroidissement étant disposées le long une troisième rangée, la troisième rangée étant adjacente et parallèle à la première rangée, les troisièmes ailettes de refroidissement étant bombées et ayant une concavité orientée vers l'arrière en considérant le sens de rotation du rotor.

- Le rotor comporte en outre une pluralité de quatrièmes ailettes de refroidissement fixées à la face périphérique du corps cylindrique, les quatrièmes ailettes de refroidissement étant disposées le long d'une quatrième rangée, la quatrième rangée étant adjacente et parallèle à la troisième rangée, les quatrièmes ailettes de refroidissement étant bombées et ayant une concavité orientée vers l'arrière en considérant le sens de rotation du rotor.

L'invention a également pour objet un ensemble ralentisseur électromagnétique et génératrice, ledit ensemble comportant un stator et un rotor ; le stator comprenant une face externe et une face interne ; la face externe portant un inducteur de ralentisseur agencé en regard d'une face intérieure du corps cylindrique ; la face interne portant un induit de génératrice ; le rotor étant conformé selon les caractéristiques mentionnées ci-dessus, le corps cylindrique formant un induit de ralentisseur, la bague intérieure de fixation comprenant un inducteur de génératrice disposé en regard de la face interne du stator.

## Brève description des figures

[Fig. 1] est une vue en perspective d'une partie d'un rotor selon l'invention ;
[Fig. 2] est une vue de dessus d'une portion du rotor de la figure 1 sectionné selon un plan II-II illustré sur la figure 1 ;
[Fig. 3] est une vue de dessus d'une partie du rotor illustré sur la figure 1 ;
[Fig. 4] est une vue schématique en coupe radiale d'une partie d'un ensemble ralentisseur électromagnétique et génératrice comprenant un rotor illustré sur la figure 1.

## Description détaillée de l'invention

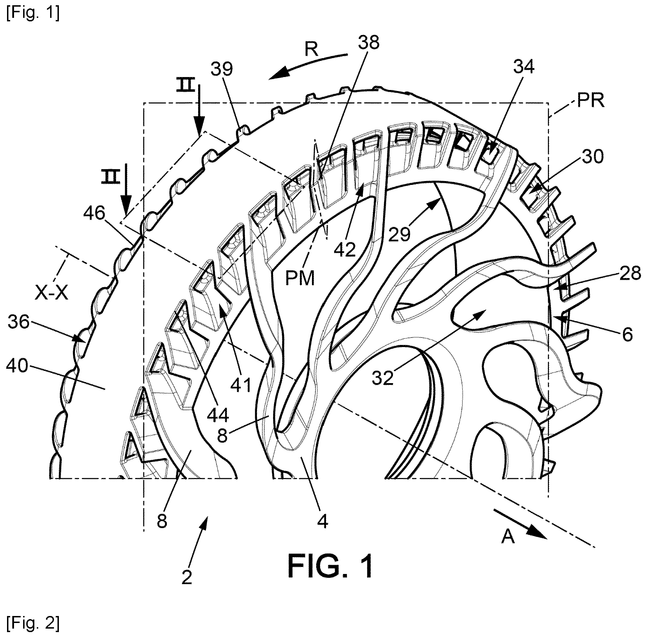

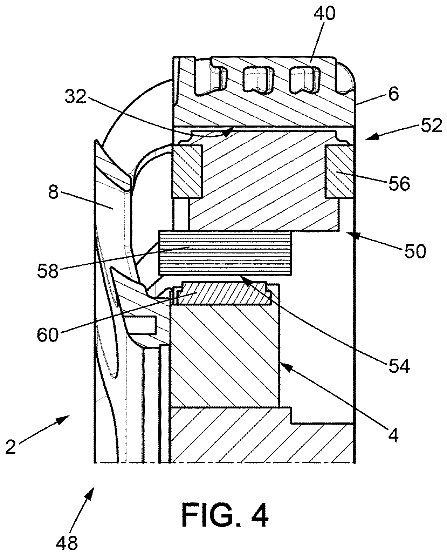

En référence à la figure 1, l'invention concerne un rotor 2 de machine électrique tournante. Par exemple, le rotor 2 est un rotor de ralentisseur électromagnétique pour véhicule. En particulier, ce rotor peut être monté dans un ensemble ralentisseur électromagnétique et génératrice tel qu'illustré sur la figure 4.

Le rotor 2 est propre à tourner selon un sens de rotation R autour d'un axe de rotation X-X s'étendant selon une direction axiale A. Pour les besoins de la présente description, on définit un plan radial PR perpendiculaire à l'axe de rotation X-X.

Le rotor 2 comporte une bague intérieure 4 destinée à être fixée à un arbre rotatif non représenté, un corps cylindrique 6 et des bras de fixation 8 raccordés à la bague intérieure et au corps cylindrique.

La bague intérieure 4 et le corps cylindrique 6 sont coaxiaux.

Dans l'exemple illustré à titre d'exemple et nullement limitatif, le rotor comporte dix bras de fixation. Les bras de fixation sont régulièrement répartis autour de la bague intérieure.

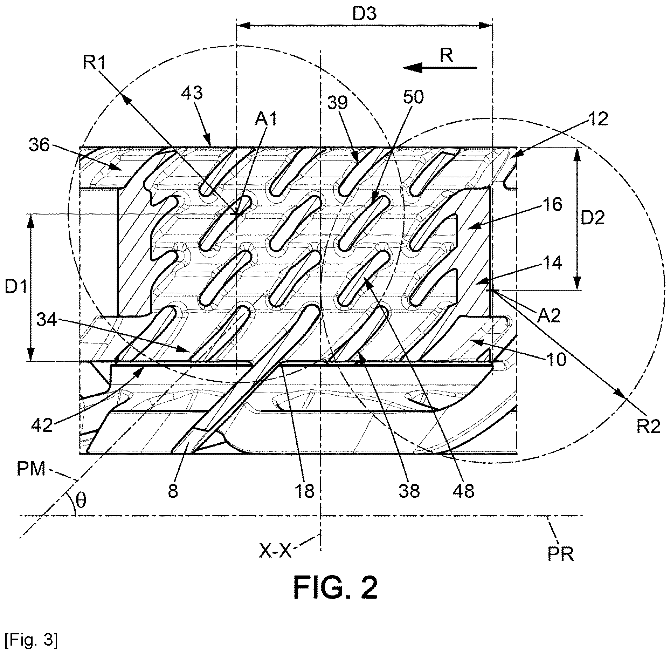

En référence à la figure 2, le corps cylindrique 6 présente la forme d'un manchon. Le corps cylindrique 6 comprend une face latérale 28 de raccordement, une face latérale 29 libre opposée à la face de raccordement, une face périphérique 30 ou face extérieure et une face intérieure 32.

La face latérale 28 de raccordement est la face sur laquelle les bras de fixation 8 sont raccordés.

La face périphérique 30 comprend un premier bord 34 adjacent à la face latérale de raccordement et un deuxième bord 36 opposé au premier bord. Le premier bord 34 de la face périphérique 30 est délimité selon la direction axiale A par une extrémité 42. Le deuxième bord 36 de la face périphérique 30 est délimité selon la direction axiale A par une extrémité 43.

Le corps cylindrique 6 comprend des premières ailettes de refroidissement 38 et des deuxièmes ailettes de refroidissement 39. Les premières 38 et les deuxièmes 39 ailettes de refroidissement sont fixées à la face périphérique 30 du corps cylindrique. En référence à la figure 2, les premières 38 et les deuxièmes 39 ailettes de refroidissement présentent la forme de lamelles bombées. Le plan médian PM des premières ailettes de refroidissement 38 est orienté selon un angle θ compris entre 40 degrés et 60 degrés par rapport au plan radial PR. De préférence, l'angle θ est sensiblement égal à 45 degrés. La portion des premières ailettes de refroidissement la plus proche de l'extrémité 43 est dirigée en aval par rapport à la portion des premières ailettes de refroidissement la plus proche de l'extrémité 42, en considérant le sens de rotation du rotor.

Le plan médian PM des deuxièmes 39 ailettes de refroidissement est parallèle au plan médian des premières ailettes de refroidissement.

Les premières ailettes de refroidissement 38 sont disposées selon une première rangée 10. Les premières ailettes de refroidissement de la première rangée sont alignées le long du premier bord 34.

Les premières ailettes de refroidissement 38 ont une concavité orientée vers l'avant en considérant le sens de rotation R du rotor. Autrement dit, un vecteur normal à la face concave des ailettes de refroidissement 38 de la première rangée est dirigé dans le même sens que le sens de rotation R du rotor par rapport au stator. Ainsi, les premières ailettes de refroidissement 38 sont propres à diriger une plus grande quantité d'air vers la face périphérique 30 du corps cylindrique.

Les premières ailettes de refroidissement 38 présentent une courbure ayant un premier centre A1 et un premier rayon de courbure R1. Le premier centre A1 est éloigné d'une première distance D1 de l'extrémité 42 du premier bord du corps cylindrique. La première distance D1 est mesurée selon la direction axiale A. Le rapport entre le premier rayon de courbure R1 et la première distance D1 est compris entre 1 et 2.

$$1 < \frac{R1}{D1} < 2$$

Les deuxièmes ailettes de refroidissement 39 sont disposées selon une deuxième rangée 12. Les deuxièmes ailettes de refroidissement 39 sont alignées le long du deuxième bord 36.

Les deuxièmes ailettes de refroidissement 39 sont également bombées et ont une concavité orientée vers l'arrière en considérant le sens de rotation R du rotor. Autrement dit, un vecteur normal à la face concave des ailettes de refroidissement 38 de la deuxième rangée est dirigé dans un sens opposé au sens de rotation du rotor R. Cette orientation augmente l'évacuation de l'air vers l'extérieur du rotor, lors de la rotation du rotor.

Les deuxièmes ailettes de refroidissement 39 présentent une courbure ayant un deuxième centre A2 et un deuxième rayon de courbure R2. Le deuxième centre A2 est éloigné d'une deuxième distance D2 de l'extrémité 43 du deuxième bord latéral. La deuxième distance D2 est mesurée selon la direction axiale A. Le rapport entre le deuxième rayon de courbure R2 et la deuxième distance D2 est compris entre 1 et 2.

$$1 < \frac{R2}{D2} < 2$$

Le premier centre A1 est éloigné du deuxième centre A2 d'une troisième distance D3 mesurée selon une direction perpendiculaire à la direction axiale A. Le rapport entre deux fois le premier rayon de courbure R1 divisé par la troisième distance D3 est compris entre 1,2 et 1,5.

$$1,2 < \frac{2R1}{D3} < 1,5$$

De la même façon, le rapport entre deux fois le deuxième rayon de courbure R2 divisé par la troisième distance D3 est compris entre 1,2 et 1,5.

$$1,2 < \frac{2R2}{D3} < 1,5$$

Le bout 18 des bras de fixation 8 est fixée à la face de raccordement 29. De préférence, le bout des bras de fixation s'étend en saillie perpendiculairement à la face périphérique 30 du corps cylindrique de manière former une ailette de refroidissement agencée dans la première rangée 10 et parallèle aux premières ailettes de refroidissement.

Le corps cylindrique 6 comporte en outre une pluralité de troisièmes ailettes de refroidissement 48 fixées à la face périphérique 30 du corps cylindrique. Les troisièmes ailettes de refroidissement 48 sont disposées le long une troisième rangée 14 s'étendant parallèlement à la première rangée. Les troisièmes ailettes de refroidissement 48 présentent une forme de lamelles bombées. Les troisièmes ailettes de refroidissement 48 présentent une concavité orientée vers l'arrière en considérant le sens de rotation du rotor. Autrement dit, un vecteur normal à la face concave des troisièmes ailettes de refroidissement 48 est dirigé dans un sens opposé au sens de rotation du rotor R.

Le corps cylindrique comporte en outre une pluralité de quatrièmes ailettes de refroidissement 50 fixées à la face périphérique du corps cylindrique. Les quatrièmes ailettes de refroidissement 50 sont disposées le long d'une quatrième rangée 16 s'étendant parallèlement à la première rangée. Les quatrièmes ailettes de refroidissement 50 présentent une forme de lamelle bombée. Les quatrièmes ailettes de refroidissement 48 présentent une concavité orientée vers l'arrière en considérant le sens de rotation du rotor. Autrement dit, un vecteur normal à la face concave des quatrièmes ailettes de refroidissement 50 est dirigé dans un sens opposé au sens de rotation du rotor R.

Les troisièmes 48 et les quatrièmes 50 ailettes de refroidissement s'étendent parallèlement aux premières ailettes de refroidissement 38.

Le plan médian PM des troisièmes 48 et des quatrièmes 50 ailettes de refroidissement est orienté selon un angle θ compris entre 40 degrés et 60 degrés par rapport au plan radial PR. De préférence, l'angle θ est sensiblement égal à 45 degrés.

De préférence, le rotor 2 comporte en outre une couronne 40 coaxiale au corps cylindrique. La couronne 40 forme avec les ailettes de refroidissement des canaux de refroidissement 41. Ces canaux de refroidissement favorisent le refroidissement du corps cylindrique formant l'induit de la machine tournante.

Dans le mode de réalisation préféré illustré sur les figures, la couronne 40 coiffe les troisièmes et quatrièmes ailettes de refroidissement disposées sur une partie centrale de la face périphérique 30 ainsi qu'une partie des premières et des deuxièmes ailettes de refroidissement.

Une grande partie des premières ailettes de refroidissement 38 agencées sur le premier bord 34 et une grande partie des deuxièmes ailettes de refroidissement 39 agencées sur le deuxième bord 36 de la face périphérique sont ouvertes sur l'extérieur. Autrement dit, une grande partie des premières ailettes de refroidissement 38 et une grande partie des deuxièmes ailettes de refroidissement 39 n'est pas couverte par la couronne 40. Seule une petite partie des premières ailettes de refroidissement est recouverte par la couronne. La partie des premières ailettes de refroidissement non recouverte par la couronne présente une longueur d'environ 90% de la longueur totale des premières ailettes de refroidissement. De la même façon, la partie des deuxièmes ailettes de refroidissement non recouverte par la couronne présente une longueur d'environ 90% de la longueur des deuxièmes ailettes de refroidissement.

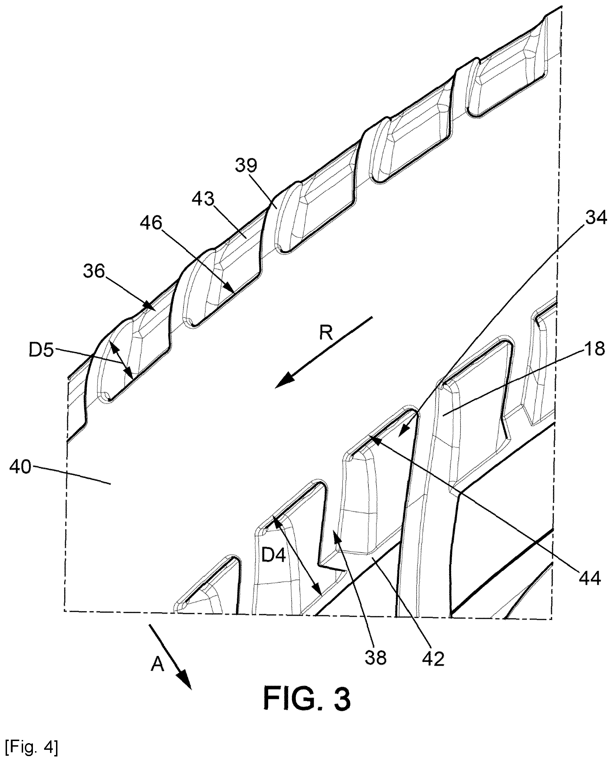

En référence à la figure 3, la couronne 40 est délimitée selon la direction axiale, d'une part, par une première extrémité latérale 44 et, d'autre part, par une deuxième extrémité latérale 46.

La première extrémité latérale 44 est située adjacente à l'extrémité 42 du premier bord de la face périphérique. La deuxième extrémité latérale 46 est située adjacente à l'extrémité 43 du deuxième bord de la face périphérique.

De préférence, le bord latéral 44 de la couronne est éloigné de l'extrémité 42 du premier bord de la face périphérique d'une quatrième distance D4 comprise entre 15 millimètres et 30 millimètres. La quatrième distance D4 est mesurée selon la direction axiale A.

De préférence, l'extrémité latérale 46 de la couronne étant éloignée de l'extrémité 43 du deuxième bord d'une cinquième distance D5 comprise entre 15 millimètres et 30 millimètres. La cinquième distance D5 est mesurée selon la direction axiale A. Dans le mode de réalisation représenté sur les figures et nullement limitatif, la quatrième distance D4 est égale à la cinquième distance D5.

De préférence, le bout 18 des bras de fixation est également raccordée à une face latérale de la couronne.

En référence à la figure 4, l'invention concerne également un ensemble 48 ralentisseur électromagnétique et génératrice. Cet ensemble comporte un rotor 2 et un stator 50. Le rotor 2 est conformé selon les caractéristiques mentionnées ci-dessus.

Le stator 50 comprend une face externe 52 et une face interne 54. La face externe 52 porte un inducteur de ralentisseur 56 agencé en regard d'une face intérieure 32 du corps cylindrique. La face interne 54 porte un induit de génératrice 58. Le corps cylindrique 6 du rotor 2 forme un induit de ralentisseur. La bague intérieure de fixation 4 comprend un inducteur de génératrice 60 disposé en regard de la face interne 54 du stator.

**Revendications**

1. Rotor (2) de machine électrique tournante, en particulier de ralentisseur électromagnétique pour véhicule, le rotor (2) étant propre à tourner autour d'un axe de rotation (X-X) selon un sens de rotation (R), l'axe de rotation s'étendant selon une direction axiale (A), le rotor (2) comportant :

   - un corps cylindrique (6) comprenant une face périphérique (30), une face latérale de raccordement (28) et une face latérale libre (29) opposée à la face latérale de raccordement ; la face périphérique (30) comprenant un premier bord (34) adjacent à la face latérale de raccordement et un deuxième bord (36) ;
   - une bague intérieure (4) destinée à être fixée à un arbre rotatif, la bague intérieure (4) et le corps cylindrique (6) étant coaxiaux ;
   - des bras de fixation (8) raccordés à la bague intérieure (4) et à la face latérale de raccordement (28) du corps cylindrique,
   - une pluralité de premières ailettes de refroidissement (38) agencées sur la face périphérique (30) du corps cylindrique, les premières ailettes de refroidissement (38) étant disposées selon une première rangée (10) s'étendant le long du premier bord (34), les premières ailettes de refroidissement (38) étant bombées et ayant une concavité orientée vers l'avant en considérant le sens de rotation (R) du rotor,
- une pluralité de deuxièmes ailettes de refroidissement (39) agencée sur la face périphérique (30) du corps cylindrique, les deuxièmes ailettes de refroidissement (39) étant disposées selon une deuxième rangée (12) s'étendant parallèlement à la première rangée, les deuxièmes ailettes de refroidissement (39) étant bombées et ayant une concavité orientée vers l'arrière en considérant le sens de rotation du rotor.

2. Rotor (2) selon la revendication 1, dans lequel les premières ailettes de refroidissement (38) présentent une courbure ayant un premier centre (A1) et un premier rayon de courbure (R1), le premier centre (A1) étant éloigné d'une première distance (D1) d'une extrémité (42) du premier bord, la première distance (D1) étant mesurée selon la direction axiale (A), le rapport entre le premier rayon de courbure (R1) et la première distance (D1) étant compris entre 1 et 2.

3. Rotor (2) selon l'une quelconque des revendications 1 et 2, dans lequel les deuxièmes ailettes de refroidissement (39) présentent une courbure ayant un deuxième centre (A2) et un deuxième rayon de courbure (R2), le deuxième centre (A2) étant éloigné d'une deuxième distance (D2) d'une extrémité (43) du deuxième bord latéral, la deuxième distance (D2) étant mesurée selon la direction axiale (A), le rapport entre le deuxième rayon de courbure (R2) et la deuxième distance (D2) étant compris entre 1 et 2.

4. Rotor (2) selon la combinaison des revendications 2 et 3, dans lequel le premier centre (A1) est éloigné du deuxième centre (A2) d'une troisième distance (D3) mesurée selon une direction perpendiculaire à la direction axiale (A), le rapport entre, d'une part deux fois la longueur d'un rayon de courbure parmi le premier rayon de courbure (R1) et le deuxième rayon de courbure (R2) et d'autre part la troisième distance (D3) est comprise entre 1,2 et 1,5.

5. Rotor (2) selon l'une quelconque revendications 1 à 4, dans lequel les premières ailettes de refroidissement (38) présentent un plan médian (PM), et dans lequel le plan médian (PM) des premières ailettes de refroidissement (38) forme un angle (θ) avec le plan radial (PR) ; l'angle (θ) étant compris entre 40 degrés et 60 degrés, le plan radial (PR) étant perpendiculaire à l'axe de rotation (X-X).

6. Rotor (2) selon la revendication 5, dans lequel les deuxièmes ailettes de refroidissement (39) présentent un plan médian (PM), et dans lequel le plan médian (PM) des deuxièmes ailettes de refroidissement est parallèle au plan médian (PM) des premières ailettes de refroidissement (39).

7. Rotor (2) selon l'une quelconque des revendications 1 à 6, dans lequel la deuxième rangée (12) s'étend le long du deuxième bord (36) et dans lequel le rotor (2) comporte une couronne (40) coaxiale au corps cylindrique (6), et dans lequel la couronne (40) s'étend uniquement au-dessus d'une partie centrale de la face périphérique (30), une partie des premières ailettes de refroidissement (38) et une partie des deuxièmes ailettes de refroidissement (39) étant ouvertes sur l'extérieur.

8. Rotor (2) selon la revendication 7, dans lequel la couronne (40) comporte au moins une première extrémité latérale (44), et dans lequel le premier bord (34) est délimité par une extrémité (42), la première extrémité latérale (44) de la couronne étant éloignée de l'extrémité (42) du premier bord d'une quatrième distance (D4) comprise entre 15 millimètres et 30 millimètres, ladite quatrième distance (D4) étant mesurée selon la direction axiale.

9. Rotor (2) selon la revendication 8, dans lequel la couronne (40) comporte au moins une deuxième extrémité latérale (46) et dans lequel le deuxième bord (36) est délimité par une extrémité (43), l'extrémité latérale (46) de la couronne étant éloignée de l'extrémité (43) du deuxième bord d'une cinquième distance (D5) comprise entre 15 millimètres et 30 millimètres, ladite cinquième distance (D5) étant mesurée selon la direction axiale.

10. Rotor (2) selon l'une quelconque des revendications 1 à 9, qui comporte en outre une pluralité de troisièmes ailettes de refroidissement (48) fixées à la face périphérique (30) du corps cylindrique, les troisièmes ailettes de refroidissement (48) étant disposées le long une troisième rangée (14), la troisième rangée étant adjacente et parallèle à la première rangée (10), les troisièmes ailettes de refroidissement (48) étant bombées et ayant une concavité orientée vers l'arrière en considérant le sens de rotation (R) du rotor.

11. Rotor (2) selon la revendication 10, qui comporte en outre une pluralité de quatrièmes ailettes de refroidissement (50) fixées à la face périphérique (30) du corps cylindrique, les quatrièmes ailettes de refroidissement (50) étant disposées le long d'une quatrième rangée (16), la quatrième rangée étant adjacente et parallèle à la troisième rangée (14), les quatrièmes ailettes de refroidissement (50) étant bombées et ayant une concavité orientée vers l'arrière en considérant le sens de rotation (R) du rotor.

12. Ensemble (48) ralentisseur électromagnétique et génératrice, ledit ensemble comportant un stator (50) et un rotor (2) ; le stator (50) comprenant une face externe (52) et une face interne (54) ; la face externe (52) portant un inducteur de ralentisseur (56) agencé en regard d'une face intérieure (32) du corps cylindrique ; la face interne (54) portant un induit de génératrice (58) ; le rotor étant conformé selon l'une quelconque des revendications 1 à 11, le corps cylindrique (6) formant un induit de ralentisseur, la bague intérieure de fixation (4) comprenant un inducteur de génératrice (60) disposé en regard de la face interne (54) du stator.

[Fig. 1]

FIG. 1

[Fig. 2]

FIG. 2

[Fig. 3]

FIG. 3

[Fig. 4]

EP 4 580 015 A1

FIG. 4

Europäisches
Patentamt

European
Patent Office

Office européen
des brevets

## RAPPORT DE RECHERCHE EUROPEENNE

**Numéro de la demande**

EP 24 21 9207

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | CN 211 239 493 U (TELMA AUTOMOBILE BRAKING SYSTEM SHANGHAI CO LTD) 11 août 2020 (2020-08-11) | 1,5-12 | INV. H02K49/04 |
| A | * figures 1, 2, 4 * | 2-4 | ADD. H02K1/30 |
| Y | CN 216 699 737 U (SHENZHEN FENGYAO MOTOR SCIENCE AND TECH LIMITED COMPANY) 7 juin 2022 (2022-06-07) | 1,5-12 | H02K9/06 H02K9/22 |
| A | * figures 1, 2, 3 * | 2-4 | |
| A | US 6 253 885 B1 (TSAI HONG [US] ET AL) 3 juillet 2001 (2001-07-03) * figures 4, 12a, 12b * | 1 | |
| A | JP 2001 320870 A (SUMITOMO METAL IND) 16 novembre 2001 (2001-11-16) * figures 1, 7, 11 * | 1 | |

**DOMAINES TECHNIQUES RECHERCHES (IPC)**

H02K

Le présent rapport a été établi pour toutes les revendications

| Lieu de la recherche | Date d'achèvement de la recherche | Examinateur |
|---|---|---|
| La Haye | 12 mai 2025 | Dragojlovic, Djordje |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
................................................................
& : membre de la même famille, document correspondant

EPO FORM 1503 03.82 (P04C02)

# EP 4 580 015 A1

## ANNEXE AU RAPPORT DE RECHERCHE EUROPEENNE
## RELATIF A LA DEMANDE DE BREVET EUROPEEN NO.

EP 24 21 9207

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-05-2025

| Document brevet cité au rapport de recherche | Date de publication | Membre(s) de la famille de brevet(s) | Date de publication |
|---|---|---|---|
| CN 211239493 U | 11-08-2020 | AUCUN | |
| CN 216699737 U | 07-06-2022 | AUCUN | |
| US 6253885 B1 | 03-07-2001 | AUCUN | |
| JP 2001320870 A | 16-11-2001 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- FR 1855848